(19) Europäisches Patentamt / European Patent Office / Office européen des brevets

(11) **EP 4 318 083 B1**

(12) **EUROPEAN PATENT SPECIFICATION**

(45) Date of publication and mention
of the grant of the patent:
**25.03.2026 Bulletin 2026/13**

(21) Application number: **22827278.7**

(22) Date of filing: **19.05.2022**

(51) International Patent Classification (IPC):
*H04N 13/39* (2018.01)   *G02B 27/10* (2006.01)
*G02B 26/08* (2006.01)   *G02F 1/29* (2006.01)
*G01N 27/626* (2021.01)   *G02B 13/00* (2006.01)
*G03H 1/00* (2006.01)   *G03H 1/22* (2006.01)
*G03H 1/26* (2006.01)

(52) Cooperative Patent Classification (CPC):
**H04N 13/39; G02B 13/0005; G02B 26/0833;
G02B 26/0875; G02B 27/108; G02B 30/50;
G02B 30/56; G03H 1/0005; G03H 1/2294;
G03H 1/26;** G03H 2001/0088

(86) International application number:
**PCT/CN2022/093932**

(87) International publication number:
**WO 2022/267780 (29.12.2022 Gazette 2022/52)**

(54) **AIR IONIZATION DISPLAY DEVICE AND CONTROL METHOD THEREFOR**

LUFTIONISIERUNGSANZEIGEVORRICHTUNG UND STEUERUNGSVERFAHREN DAFÜR

DISPOSITIF D'AFFICHAGE À IONISATION D'AIR ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2021 CN 202110693799**

(43) Date of publication of application:
**07.02.2024 Bulletin 2024/06**

(73) Proprietor: **Anhui Easpeed Technology Co., Ltd.
Hefei, Anhui 230088 (CN)**

(72) Inventors:
• **CHEN, Biao**
  **Hefei, Anhui 230088 (CN)**
• **HAN, Chengfei**
  **Hefei, Anhui 230088 (CN)**
• **ZHANG, Liangliang**
  **Hefei, Anhui 230088 (CN)**

(74) Representative: **Nederlandsch Octrooibureau
P.O. Box 29720
2502 LS The Hague (NL)**

(56) References cited:
WO-A1-2013/039465   WO-A1-2017/053336
CN-A- 106 198 491   CN-A- 111 123 552
CN-A- 111 141 815   CN-A- 111 239 236
CN-A- 111 239 236   CN-A- 113 433 708
CN-U- 211 856 449   US-A1- 2014 314 114

**Description**

**CROSS-REFERENCE TO RELATED APPLICATION**

**FIELD**

The present disclosure relates to the field of imaging technologies, and more particularly, to an air ionization display apparatus and a control method therefor.

**BACKGROUND**

In an imaging process of an air ionization imaging system, a lens needs to be used to converge a beam, and air is ionized at a focal point of the lens to form a light spot. Due to a high optical power threshold per unit area of a pulse required for forming air ionization, the number of focal points formed by a spatial light modulator modulating a light field at each ionization point is limited by pulse power. That is, the number of pixels of a display picture is limited by a magnitude of the pulse power. To increase the number of pixels of the display picture, pulse output power of a light source needs to be further raised. However, in the related art, it is difficult to greatly improve the pulse output power of the light source.

In addition, optical components such as a zoom lens in an air ionization display system have limited damage thresholds, which usually make it difficult for the optical components to withstand a pulse laser having a high peak power density for a long time, resulting in an upper limit of the pulse output power of the light source. Due to the above factors, a picture region displayed by the air ionization is small and cannot meet a demand for large-picture imaging display in the air.

CN 111239236 A,WO 2013/039465 A1 and WO 2017/053336 A1 disclose air ionization display devices.

**SUMMARY**

The present disclosure aims to solve at least one of the technical problems in the related art to some extent. To this end, a first object of the present disclosure is to provide an air ionization display apparatus to realize a large range of air ionization at a relatively low output power of a laser source.

A second object of the present disclosure is to provide a control method for an air ionization display apparatus.

To achieve the above objects, in a first aspect, embodiments of the present disclosure provide an air ionization display apparatus. The apparatus includes: a pulse laser source configured to generate a pulse laser beam; a beam splitter configured to split the pulse laser beam into a first sub-beam and a second sub-beam; a pulse laser regulation assembly configured to regulate a wavelength of the second sub-beam to obtain a third sub-beam, and regulate a time difference between the third sub-beam and the first sub-beam to delay an emission of the third sub-beam; a beam combiner configured to combine the first sub-beam and the third sub-beam that is subject to the delayed emission to obtain a combined beam; and a light field adjustment and control assembly configured to adjust and converge the combined beam, and ionize air at a display region to form a holographic image. The pulse laser regulation assembly includes: a pulse laser regulator configured to regulate the wavelength of the second sub-beam to obtain the third sub-beam; and an optical delay line configured to regulate the time difference between the third sub-beam and the first sub-beam to delay the emission of the third sub-beam. The light field adjustment and control assembly includes: an adjustment unit configured to perform a direction adjustment on the combined beam; a focusing unit configured to focus the combined beam subject to the direction adjustment in the display region, and ionize the air at a position of a focal point to form an image; and a zoom unit disposed between a galvanometer unit and the focusing unit, and configured to adjust a divergence angle of a beam emitted by the galvanometer unit and adjust a depth position of the focal point, to display the holographic image

To achieve the above objects, in a second aspect, the embodiments of the present disclosure provide a control method for an air ionization display apparatus. The method is applied in the air ionization display apparatus and includes: outputting, by the pulse laser source, the pulse laser beam, and splitting, by the beam splitter, the pulse laser beam into the first sub-beam and the second sub-beam; regulating, by the pulse laser regulation assembly, the wavelength of the second sub-beam to obtain the third sub-beam, and regulating, by the pulse laser regulation assembly, the time difference between the third sub-beam and the first sub-beam, to delay the emission of the third sub-beam; combining, by the beam combiner, the first sub-beam and the third sub-beam that is subject to the delayed emission to obtain the combined beam; adjusting and converging, by the light field adjustment and control assembly, the combined beam, and ionizing, by the light field adjustment and control assembly, the air at the display region to form the holographic image; and obtaining brightness information of the holographic image, and controlling the pulse laser regulation assembly and the light field adjustment and control assembly based on the brightness information of the holographic image to enable a brightness of the holographic image to meet a predetermined condition.

In the air ionization display apparatus and the control method for the air ionization display apparatus according to the embodiments of the present disclosure, the pulse laser source may generate the pulse laser beam, and then the beam splitter splits the pulse laser beam into the first sub-beam and the second sub-beam. The pulse laser regulation assembly regulates the wavelength of the second sub-beam to obtain the third sub-beam, and regulates the time difference between the third sub-beam and the first sub-beam to delay the emission of the third sub-beam. The beam combiner combines the first sub-beam and the second sub-beam to obtain the combined beam. The light field adjustment and control assembly adjusts and converges the combined beam, and ionizes the air at the display region to form the holographic image. Therefore, the large range of air ionization at the relatively low output power of the laser source can be realized.

Additional aspects and advantages of the embodiments of present disclosure will be provided at least in part in the following description, or will become apparent at least in part from the following description, or can be learned from practicing the embodiments of the present disclosure.

## BRIEF DESCRIPTION OF THE DRAWINGS

FIG. 1 is a block diagram of a structure of an air ionization display apparatus according to an embodiment of the present disclosure.

FIG. 2 is a block diagram of a structure of an air ionization display apparatus according to another embodiment of the present disclosure.

FIG. 3 is a block diagram of a structure of an air ionization display apparatus according to yet another embodiment of the present disclosure.

FIG. 4 is a schematic diagram of a structure of an optical delay line in an example of the present disclosure.

FIG. 5 is a schematic diagram of a structure of an optical delay line in another example of the present disclosure.

FIG. 6 is a schematic diagram of a structure of a light field adjustment and control assembly in a first example of the present disclosure.

FIG. 7 is a schematic diagram of a structure of a light field adjustment and control assembly in a second example of the present disclosure.

FIG. 8 is a schematic diagram of a structure of a light field adjustment and control assembly in a third example of the present disclosure.

FIG. 9 is a schematic diagram of a structure of a light field adjustment and control assembly in a fourth example of the present disclosure.

FIG. 10 is a schematic diagram of a structure of a light field adjustment and control assembly in a fifth example of the present disclosure.

FIG. 11 is a work flowchart of an air ionization display apparatus according to an embodiment of the present disclosure.

FIG. 12 is a flowchart of a control method for an air ionization display apparatus according to an embodiment of the present disclosure.

## DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

An air ionization display apparatus and a control method for the air ionization display apparatus according to the embodiments of the present disclosure will be described below with reference to the accompanying drawings.

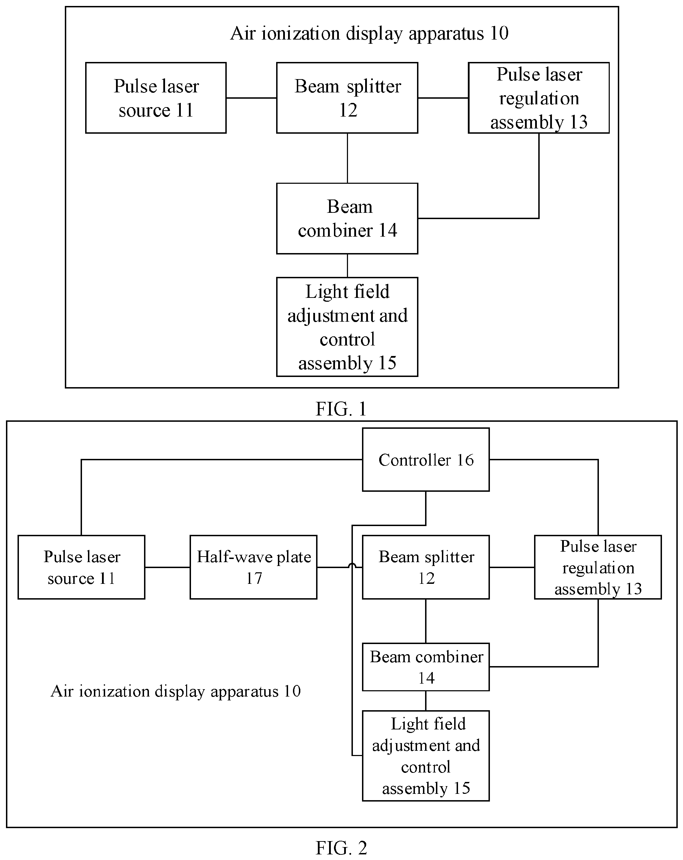

FIG. 1 is a block diagram of a structure of an air ionization display apparatus according to an embodiment of the present disclosure.

As illustrated in FIG. 1, an air ionization display apparatus 10 includes a pulse laser source 11, a beam splitter 12, a pulse laser regulation assembly 13, a beam combiner 14, and a light field adjustment and control assembly 15.

In some embodiments, the pulse laser source 11 is configured to generate a pulse laser beam. The beam splitter 12 is configured to split the pulse laser beam into a first sub-beam and a second sub-beam. The pulse laser regulation assembly 13 is configured to regulate a wavelength of the second sub-beam to obtain a third sub-beam, and regulate a time difference between the third sub-beam and the first sub-beam to delay an emission of the third sub-beam. The beam combiner 14 is configured to combine the first sub-beam and the third sub-beam that is subject to the delayed emission to obtain a combined beam. The light field adjustment and control assembly 15 is configured to adjust and converge the combined beam, and ionize air at a display region to form a holographic image.

The pulse laser beam generated by the pulse laser source 11 may have a pulse width ranging from 50 fs to 100 ns, pulse energy ranging from 20 μj to 10 mJ, a repetition frequency ranging from 500 Hz to 10 MHz, and a wavelength ranging from 1,000 nm to 1,200 nm. The pulse laser source 11 generates the pulse laser beam, and then the pulse laser beam is divided into the first sub-beam and the second sub-beam by the beam splitter 12.

Further, after the pulse laser beam is divided into the first sub-beam and the second sub-beam by the beam splitter 12, the first sub-beam passes through the beam splitter 12 to the beam combiner 14, and the second sub-beam passes through the beam splitter 12 to the pulse laser regulation assembly 13.

The first sub-beam passes through the beam combiner 14 to the light field adjustment and control assembly 15. The light field adjustment and control assembly 15 adjusts and focuses the first sub-beam. The first sub-beam enables molecules or atoms in the air to enter a first excited state at the display region. Since an ionization potential of most molecules or atoms ranges from 5 eV to 20 eV, a wavelength of single photon ionization ranges from 62 nm to 248 nm according to $E=h\lambda/c$. That is, generally, an ultraviolet single photon or a single photon in a visible light waveband is unable to ionize the atoms or molecules in the air. Therefore, the first sub-beam enables the atoms or molecules in the air to be excited to the low-energy first excited state at the display region.

The pulse laser regulation assembly 13 regulates the second sub-beam to obtain the third sub-beam. A wavelength of the third sub-beam may range from 800 nm to 2,000 nm. A repetition frequency of the third sub-beam is identical to a repetition frequency of the second sub-beam. Then, the pulse laser regulation assembly 13 delays an output of the third sub-beam to the beam combiner 14. The third sub-beam passes through the beam combiner 14 to the light field adjustment and control assembly 15. The light field adjustment and control assembly 15 adjusts and focuses the third sub-beam. Since the first sub-beam has enabled the air at the display region to enter the first excited state, the third sub-beam may re-excite the atoms or molecules in the air that have been excited to the low-energy first excited state, to ionize the air.

In some embodiments, the number of ionized atoms has the following relations with an optical flow density of the combined beam, a wavelength of the first sub-beam, and the wavelength of the third sub-beam:

$$\frac{\mathrm{d}N_0}{\mathrm{d}t} = -N_0\sigma_A\emptyset + \frac{N_1}{\tau_1} + N_1\sigma_A\emptyset\ldots\ldots\ldots\ldots\ldots\ldots\ldots\ldots\ldots\ldots\ldots\ldots(1),$$

$$\frac{\mathrm{d}N_1}{\mathrm{d}t} = N_0\sigma_A\emptyset - \frac{N_1}{\tau_1} - N_1\sigma_A\emptyset - N_1\sigma_i\emptyset\ldots\ldots\ldots\ldots\ldots\ldots\ldots\ldots(2),$$

and

$$\frac{\mathrm{d}N_i}{\mathrm{d}t} = N_1\sigma_i\emptyset\ldots\ldots\ldots\ldots\ldots\ldots\ldots\ldots\ldots\ldots\ldots\ldots\ldots\ldots(3),$$

where $N_0(t)$ represents the total number of atoms, $N_1(t)$ represents the number of atoms in the first excited state, $\sigma_A$ represents an excited absorption cross section from a ground state to the first excited state, $\sigma_i$ represents an ionization cross section from the first excited state to a continuum state, $\tau_1$ represents a spontaneous emission lifetime of the first excited state, $\Phi$ represents the optical flow density of the combined beam, and $N_i(t)$ represents the number of ionized atoms. $\sigma_A$ is related to the wavelength of the first sub-beam. $\sigma_i$ is related to the wavelength of the third sub-beam.

By adding equation (1) to equation (2) and differentiating equation (3), equation (4) can be obtained:

$$\frac{\mathrm{d}^2N_1}{\mathrm{d}t^2} + \left[(2\sigma_A + \sigma_i)\emptyset + \frac{1}{\tau}\right]\frac{\mathrm{d}N_1}{\mathrm{d}t} + \sigma_A\sigma_i\emptyset^2 N_1 = 0\ldots\ldots\ldots\ldots\ldots\ldots\ldots(4).$$

A general solution of the above equation (4) is as follows:

$$N_1 = \frac{N_0\sigma_i\sigma_A\emptyset^2}{\lambda_2-\lambda_1}\left[e^{-\lambda_2 t} - e^{-\lambda_1 t}\right]\ldots\ldots\ldots\ldots\ldots\ldots\ldots\ldots\ldots\ldots(5),$$

where

$$\lambda_2 = b + \sqrt{b^2 - \xi^2}\ldots\ldots\ldots\ldots\ldots\ldots\ldots\ldots\ldots\ldots\ldots\ldots\ldots(6),$$

and

$$\lambda_1 = b - \sqrt{b^2 - \xi^2} \ldots\ldots\ldots\ldots\ldots\ldots\ldots\ldots\ldots\ldots\ldots\ldots\ldots\ldots(7).$$

In equation (6) and equation (7), b and $\xi^2$ satisfy:

$$2b = (2\sigma_A + \sigma_i)\emptyset + \frac{1}{\tau}\ldots\ldots\ldots\ldots\ldots\ldots\ldots\ldots\ldots\ldots\ldots\ldots\ldots(8),$$

and

$$\xi^2 = \sigma_A\sigma_i\emptyset^2 \ldots\ldots\ldots\ldots\ldots\ldots\ldots\ldots\ldots\ldots\ldots\ldots\ldots\ldots\ldots(9).$$

Thus, a solution of the number Ni (t) of ionized atoms is:

$$N_i = \frac{N_0\sigma_i\sigma_A\emptyset^2}{\lambda_2 - \lambda_1}\left[\frac{1}{\lambda_2}e^{-\lambda_2 t} - \frac{1}{\lambda_1}e^{-\lambda_1 t}\right]\ldots\ldots\ldots\ldots\ldots\ldots\ldots\ldots\ldots\ldots(10).$$

Therefore, by regulating a delay of the third sub-beam, the third sub-beam re-excites the atoms or molecules in the air at an appropriate time point after the first sub-beam excites the molecules or atoms in the air to the first excited state. Moreover, through adjusting the wavelength of the third sub-beam, the third sub-beam can perform a resonance excitation on the atoms or molecules in the first excited state. In this way, a threshold of output power required by the laser to ionize the air can be reduced, and a large range of air ionization at a relatively low output power of the laser source can be realized.

It should be noted that, an extinction ratio Tp: Ts of the beam splitter 12 is greater than 1,000: 1, an extinction ratio Tp: Ts of the beam combiner 14 is greater than 1,000: 1, and the light field adjustment and control assembly 15 can control a scanning range of the combined beam with an X direction: 100 mm to 200 mm, a Y direction: 100 mm to 200 mm, and a Z direction: 100 mm to 200 mm. The above display region is a three-dimensional display region, and preferably greater than the scanning range of the combined beam.

Further, referring to FIG. 2, the air ionization display apparatus 10 further includes a controller 16 and a half-wave plate 17. The controller 16 is connected to the pulse laser source 11, the pulse laser regulation assembly 13, and the light field adjustment and control assembly 15.

In some embodiments, the controller 16 is configured to control laser outputted by the pulse laser source 11, the pulse laser regulation assembly 13, and the light field adjustment and control assembly 15 based on brightness information of the holographic image, to control the holographic image to be displayed in the display region.

The half-wave plate 17 is configured to regulate polarization of the pulse laser beam outputted by the pulse laser source 11. The pulse laser beam generated by the pulse laser source 11 becomes horizontally polarized light and vertically polarized light after passing through the half-wave plate 17, and then the polarized light may be filtered by the beam splitter 12 and the beam combiner 14. For example, it may be set that the beam splitter 12 has a reflectivity ranging from 0.5% to 1% for the horizontally polarized light, and the beam combiner 14 has a reflectivity ranging from 99% to 99.5% for the vertically polarized light, thereby enabling that the combined beam is substantially the horizontally polarized light. The half-wave plate 17 may have a size ranging from 20 mm to 30mm.

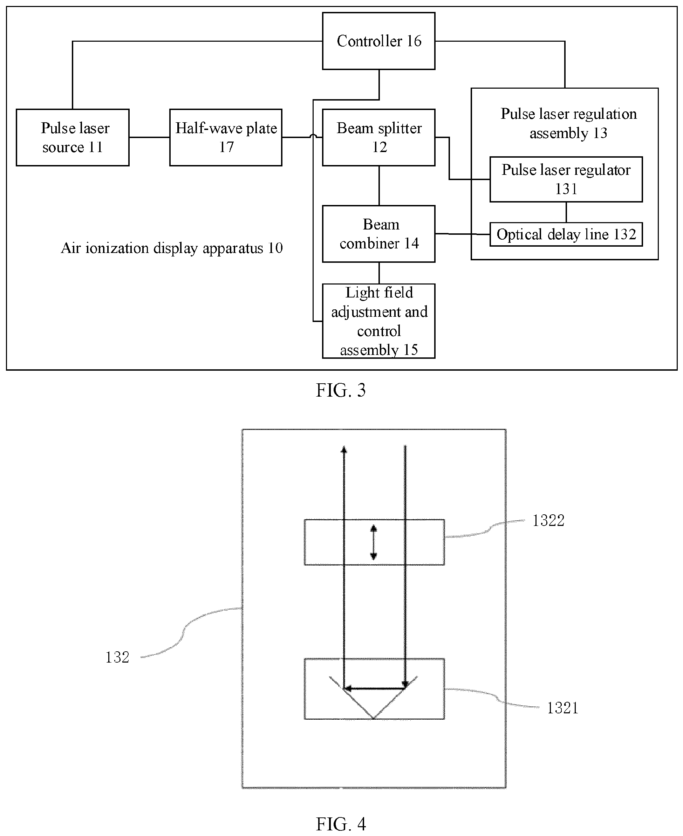

Further, referring to FIG. 3, the pulse laser regulation assembly 13 includes a pulse laser regulator 131 and an optical delay line 132.

In some embodiments, the pulse laser regulator 131 is configured to regulate the wavelength of the second sub-beam to obtain the third sub-beam. For example, the second sub-beam may be used as a pumping source of the pulse laser regulator 131 to excite a laser working material in the pulse laser regulator 131, to enable the pulse laser regulation assembly 13 to generate the third sub-beam; or to enable the second sub-beam to pass through a predetermined medium to change the wavelength of the second sub-beam.

Further, the optical delay line 132 is configured to regulate the time difference between the third sub-beam and the first sub-beam to delay the emission of the third sub-beam.

Referring to FIG. 4, the optical delay line 132 includes a cube-corner prism 1321 and a motorized translation stage 1322. The cube-corner prism 1321 includes two total reflection mirrors that are perpendicular to each other. The cube-corner prism 1321 is configured to reflect the third sub-beam emitted by the pulse laser regulator 131 to the beam combiner 14. The motorized translation stage 1322 is configured to drive the cube-corner prism 1321 to move in an incident direction of the third sub-beam. The motorized translation stage 1322 may have a precision ranging from 1 um to 10 um.

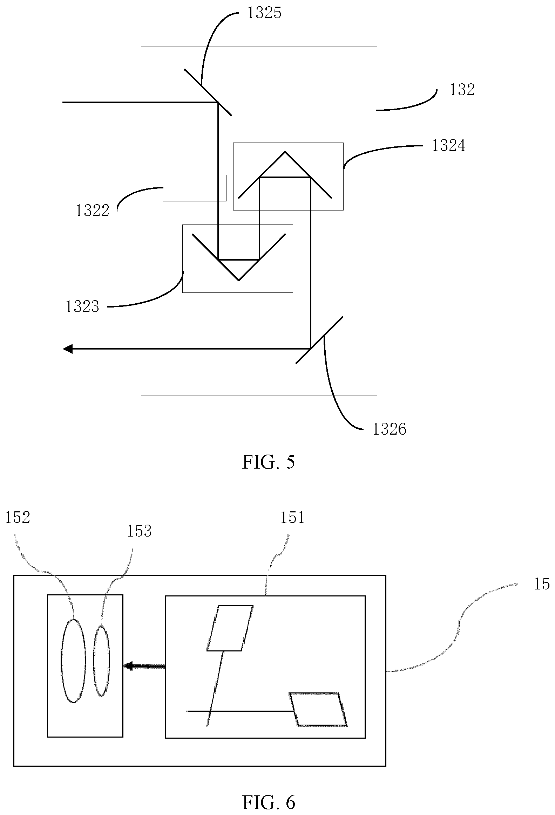

Optionally, referring to FIG. 5, the optical delay line 132 may further include a first cube-corner prism 1323, a second cube-corner prism 1324, a first reflective mirror 1325, and a second reflective mirror 1326, and may further include a motorized translation stage 1322. Each of the first cube-corner prism 1323 and the second cube-corner prism 1324 includes two total reflection mirrors that are perpendicular to each other. One of the two total reflection mirrors of the first cube-corner prism 1323 is disposed directly opposite to one of the two total reflection mirrors of the second cube-corner prism 1324. The first reflective mirror 1325 is configured to reflect the third sub-beam emitted by the pulse laser regulator 131 to the other one of the two total reflection mirrors of the first cube-corner prism 1323. The second reflective mirror 1326 is configured to reflect the third sub-beam emitted by the other one of the two total reflection mirrors of the second cube-corner prism 1324 to the beam combiner 14. The motorized translation stage 1322 is configured to drive at least one of the first cube-corner prism 1323 and the second cube-corner prism 1324 to move in the incident direction of the third sub-beam. A plurality of motorized translation stages 1322 may also be provided, and is in a one-to-one correspondence with the cube-corner prisms. The motorized translation stage 1322 may have a precision ranging from 1 um to 10 um.

It should be noted that the time difference between the third sub-beam and the first sub-beam may range from 100 fs to 10 ns, and may preferably be 1 ps.

Further, referring to FIG. 6, the light field adjustment and control assembly 15 includes an adjustment unit 151, a focusing unit 152, and a zoom unit 153.

In some embodiments, the adjustment unit 151 is configured to perform a direction adjustment on the combined beam. The focusing unit 152 is configured to focus the combined beam subject to the direction adjustment in the display region, and ionize the air at a position of a focal point to form an image. The zoom unit 153 is disposed between a galvanometer unit and the focusing unit 152, and is configured to adjust a divergence angle of a beam emitted by the galvanometer unit and adjust a depth position of the focal point, to display the holographic image.

The adjustment unit 151 includes a galvanometer assembly. The galvanometer assembly includes two groups of reflective mirrors that are perpendicular to each other. The focusing unit 152 includes an f-theta assembly. The zoom unit 153 includes a zoom lens assembly. The two groups of reflective mirrors in the galvanometer unit perform a deflection in a horizontal direction and a deflection in a vertical direction, respectively, to control a position of the focal point on a plane. For example, a position of the focal point in the X direction and the Z direction may be adjusted by using the galvanometer assembly, the position of the focal point in the Y direction may be adjusted by using the zoom unit 153, and thus the focusing unit 152 enables the air at the focal point to be ionized to form an image. Therefore, the holographic image can be displayed by scanning the display region.

Optionally, each of the adjustment unit 151, the focusing unit 152, and the zoom unit 153 may be a replaceable unit, and thus a user can also replace each component in the light field adjustment and control assembly 15 to enable the light field adjustment and control assembly 15 to better meet demands of the user.

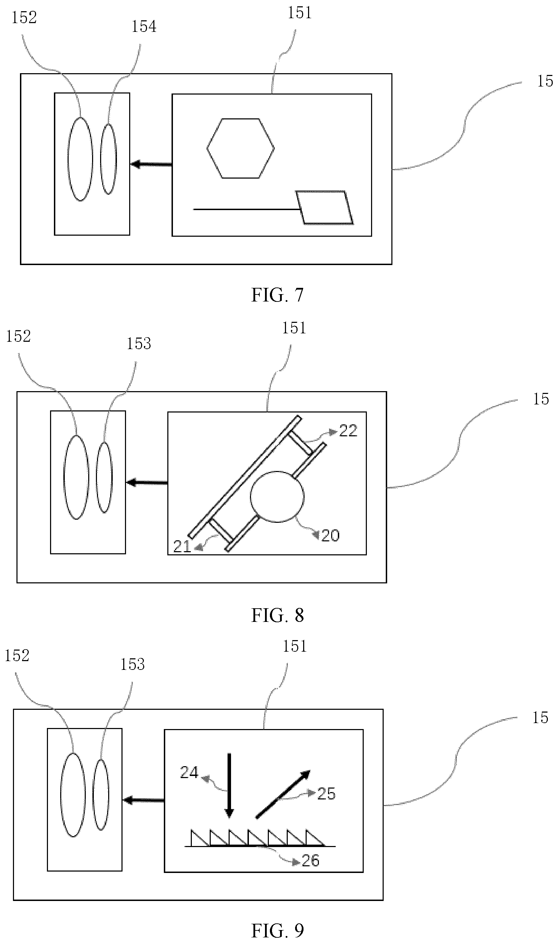

As an example, referring to FIG. 7, the adjustment unit 151 may further include an ultrafast rotary polygonal mirror assembly. The ultrafast rotary polygonal mirror assembly includes a polygonal reflecting body capable of quick rotation. The zoom unit 153 includes an ultrafast deformable mirror assembly. The ultrafast deformable mirror assembly includes a piezoelectric material driver and a reflective mirror. As the polygonal reflecting body capable of quick rotation, the ultrafast rotary polygonal mirror assembly has a clear aperture ranging from 15 mm to 20 mm. Since the polygonal reflecting body only needs to rotate in one direction during rotation, the quick rotation can be performed. A rotation speed of the polygonal reflecting body may range from 500 m/s to 600 m/s. The reflective mirror may be composed of a plurality of small reflective mirrors, or may be a whole piece of thin reflective surface. Therefore, an imaging speed of the light field adjustment and control assembly 15 can be increased.

Alternatively, referring to FIG. 8, the adjustment unit 151 may further include a Micro-Electro-Mechanical System (MEMS) micro mirror. The MEMS micro mirror includes a reflective mirror 20, a fixed electrode 21, and a moving electrode 22. The MEMS micro mirror may deflect, in a specific manner and with a specific time sequence, the combined beam entering the light field adjustment and control assembly 15. Since the reflective mirror 20 has features of small size, electrostatic drive, and no universal joint, the MEMS micro mirror has advantages of high scanning frequency, small size, and low costs, thus the imaging speed of the light field adjustment and control assembly 15 can be increased. Generally, the MEMS micro mirror may have the scanning frequency ranging from 500 Hz to 1,000 Hz.

Alternatively, referring to FIG. 9, the adjustment unit 151 may further include a liquid crystal optical phased array. The liquid crystal optical phased array includes a liquid crystal molecular layer 26. The liquid crystal optical phased array deflects a direction of the combine beam entering the light field adjustment and control assembly 15 by means of regulating an orientation of the liquid crystal molecular layer 26. The liquid crystal optical phased array has features of low drive voltage, high deflection speed, and easy combination with a microelectronic control circuit. In FIG. 9, 24 represents the combined beam, and 25 represents the adjusted combined beam.

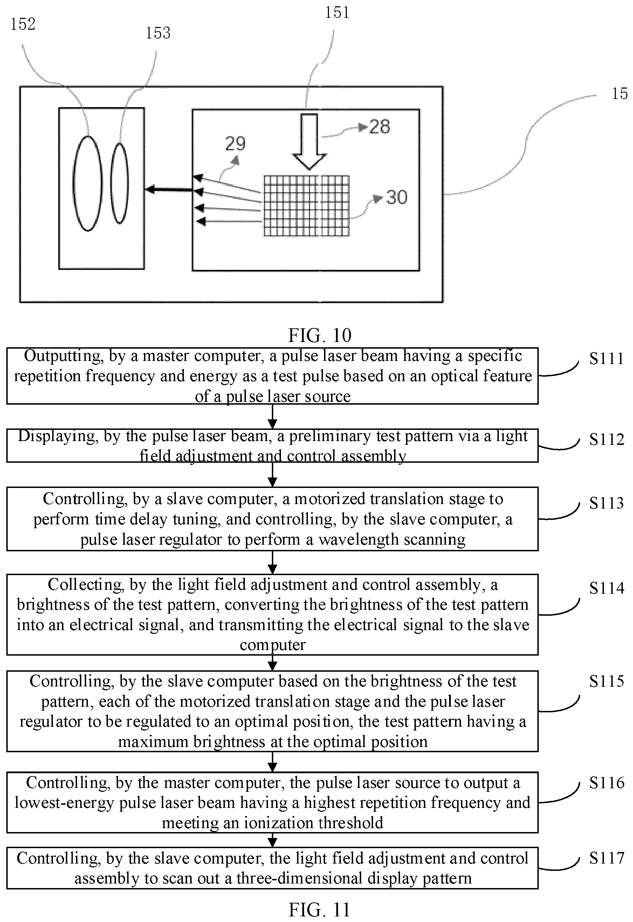

Alternatively, referring to FIG. 10, the adjustment unit 151 may further include a digital micro galvanometer array. The digital micro galvanometer array includes a micro galvanometer array lens 30, e.g., a Digital Micro-mirror Device (DMD) chip. The digital micro galvanometer array can control to focus the combined beam on the display region or not by controlling a switch of the micro galvanometer array lens 30. Generally, the digital micro galvanometer array may have a resolution of 1,280 × 800, a pixel size ranging from 10 um to 20 um, a wavelength ranging from 850 nm to 2,000 nm, an optical window transmittance greater than 93%, and a frame frequency as high as 5,000 fps. With the digital micro galvanometer array, a frame frequency of three-dimensional display and the imaging speed of the light field adjustment and control assembly 15 can be increased. In FIG. 10, 28 represents the combined beam, and 29 represents the adjusted combined beam.

In an embodiment of the present disclosure, as illustrated in FIG. 11, the air ionization display apparatus 10 may form the holographic image at the display region through the following steps.

At S111, a master computer outputs a pulse laser beam having a specific repetition frequency and energy as a test pulse based on an optical characteristic of the pulse laser source.

At S112, the pulse laser beam first displays a preliminary test pattern via the light field adjustment and control assembly.

As an example, the test pattern may be a square.

At S113, the motorized translation stage is controlled by a slave computer to perform time delay tuning, and the pulse laser regulator is controlled by the slave computer to perform a wavelength scanning.

In some embodiments, the motorized translation stage 1322 may be controlled by the slave computer to drive the cube-corner prism to move in the incident direction of the third sub-beam, to change the time difference between the third sub-beam and the first sub-beam, and the pulse laser regulator 131 may be controlled by the slave computer to perform the wavelength scanning to change the wavelength of the third sub-beam.

At S114, a brightness of the test pattern is collected by the light field adjustment and control assembly, is converted into an electrical signal, and is transmitted to the slave computer.

In some embodiments, the light field adjustment and control assembly 15 displays the test pattern at the display region using the test pulse, to collect the brightness of the test pattern.

At S115, the slave computer controls, based on the brightness of the test pattern, each of the motorized translation stage and the pulse laser regulator to be regulated to an optimal position. The test pattern has a maximum brightness at the optimal position.

The optimal position is the time difference between the third sub-beam and the first sub-beam and the wavelength of the third sub-beam that realizes the maximum brightness of the test pattern.

At S116, the master computer controls the pulse laser source to output a lowest-energy pulse laser beam having a highest repetition frequency and meeting an ionization threshold.

Therefore, the light field adjustment and control assembly 15 may use the pulse laser beam to scan at the display region.

At S117, the slave computer controls the light field adjustment and control assembly to scan out a three-dimensional display pattern.

For example, the master computer may be a remote control module, the slave computer may be a field control module. The above controller 16 includes the master computer and the slave computer.

Therefore, the brightness information of the holographic image is obtained, and the pulse laser regulation assembly 13 and the light field adjustment and control assembly 15 are controlled based on the brightness information of the holographic image to enable a brightness of the holographic image to meet a predetermined condition.

To sum up, with the air ionization display apparatus according to the embodiments of the present disclosure, the pulse laser beam is split by the beam splitter into the first sub-beam and the second sub-beam. The air at the display region is excited to the first excited state by using the first sub-beam. The pulse laser regulation assembly regulates the wavelength of the second sub-beam to obtain the third sub-beam, and delays the emission of the third sub-beam. The third sub-beam is used for ionizing the air in the first excited state, which enables the air at the display region to be ionized to form the holographic image. Therefore, a large range of air ionization at a relatively low output power of the laser source can be realized, and thus safety of the air ionization display apparatus is ensured, and costs of the apparatus are reduced. Moreover, through forming the holographic image at the display region, the user can directly watch a three-dimensional image, thereby improving user experience.

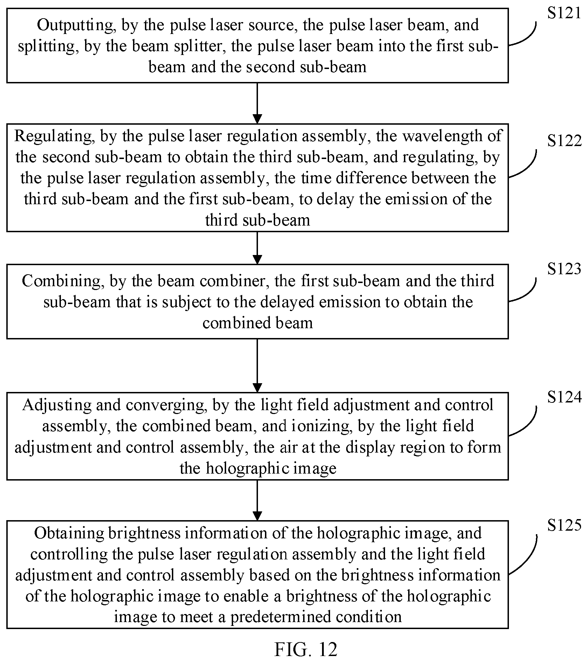

FIG. 12 is a flowchart of a control method for an air ionization display apparatus according to an embodiment of the present disclosure.

In this embodiment, the control method for the air ionization display apparatus is applied in the air ionization display apparatus in the embodiments described above.

As illustrated in FIG. 12, the control method for the air ionization display apparatus includes the following steps.

At S121, the pulse laser beam is outputted by the pulse laser source, and the pulse laser beam is split by the beam splitter into the first sub-beam and the second sub-beam.

At S122, the wavelength of the second sub-beam is regulated by the pulse laser regulation assembly to obtain the third sub-beam, and the time difference between the third sub-beam and the first sub-beam is regulated by the pulse laser regulation assembly to delay the emission of the third sub-beam.

At S123, the first sub-beam and the third sub-beam that is subject to the delayed emission are combined by the beam combiner to obtain the combined beam.

At S124, the combined beam is adjusted and converged by the light field adjustment and control assembly, and the air at the display region is ionized by the light field adjustment and control assembly to form the holographic image.

At S125, brightness information of the holographic image is obtained, and the pulse laser regulation assembly and the light field adjustment and control assembly are controlled based on the brightness information of the holographic image to enable a brightness of the holographic image to meet a predetermined condition.

Optionally, subsequent to controlling the pulse laser regulation assembly and the light field adjustment and control assembly based on the brightness information of the holographic image, the pulse laser source may be further controlled to output a lowest-energy pulse laser beam having a highest allowable repetition frequency and meeting an air ionization threshold.

It should be noted that, reference to other specific implementations of the control method for the air ionization display apparatus of the embodiments of the present disclosure can be made to the air ionization display apparatus described above.

To sum up, with the control method for the air ionization display apparatus of the embodiments of the present disclosure, the pulse laser beam is split into the first sub-beam and the second sub-beam. The wavelength of the second sub-beam is regulated to obtain the third sub-beam. The time difference between the third sub-beam and the first sub-beam is regulated to delay the emission of the third sub-beam. The first sub-beam and the third sub-beam that is subject to the delayed emission are combined to obtain the combined beam. The air at the display region is ionized by using the combined beam to form the holographic image. The brightness information of the holographic image is obtained. Controlling is performed based on the brightness information of the holographic image to enable the brightness of the holographic image to meet the predetermined condition. Therefore, the large range of air ionization at the relatively low output power of the laser source can be realized, and thus the safety of the air ionization display apparatus is ensured, and the costs of the apparatus are reduced. Moreover, through forming the holographic image at the display region, the user can directly watch the three-dimensional image, thereby improving the user experience.

It should be noted that the logics and/or steps represented in the flowchart or described otherwise herein can be, for example, considered as a list of ordered executable instructions for implementing logic functions, and can be embodied in any computer-readable medium that is to be used by or used with an instruction execution system, apparatus, or device (such as a computer-based system, a system including a processor, or any other system that can retrieve and execute instructions from an instruction execution system, apparatus, or device). For the present disclosure, a "computer-readable medium" can be any apparatus that can contain, store, communicate, propagate, or transmit a program to be used by or used with an instruction execution system, apparatus, or device. More specific examples of computer-readable mediums include, as a non-exhaustive list: an electrical connector (electronic device) with one or more wirings, a portable computer disk case (magnetic devices), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be paper or other suitable medium on which the program can be printed, as the program can be obtained electronically, e.g., by optically scanning the paper or the other medium, and then editing, interpreting, or otherwise processing the scanning result when necessary, and then stored in a computer memory.

It should be understood that each part of the present disclosure can be implemented in hardware, software, firmware or any combination thereof. In the above embodiments, a number of steps or methods can be implemented using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logic functions on data signals, an application-specific integrated circuit with suitable combined logic gates, a Programmable Gate Array (PGA), a Field Programmable Gate Array (FPGA), etc.

In the disclosure, the description with reference to the terms "an embodiment", "some embodiments", "an example", "a specific example", or "some examples", etc., means that specific features, structures, materials, or characteristics described in conjunction with the embodiment or example are included in at least one embodiment or example of the present disclosure. In this specification, any schematic representation of the above terms does not necessarily refer to the same embodiment or example. Moreover, the specific features, structures, materials or characteristics as described can be combined in any one or more embodiments or examples as appropriate.

In the description of the present disclosure, it is to be understood that, terms such as "center", "longitudinal", "lateral", "length", "width", "thickness", "upper", "below", "front", "back", "left", "right", "vertical", "horizontal", "top", "bottom", "in", "out", "clockwise", "counterclockwise", "axial", "radial", "circumferential", etc., is based on the orientation or position relationship shown in the accompanying drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, e.g., two, three, etc., unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above", "on" and "over" the second feature may mean that the first feature is directly above or obliquely above the second feature, or simply mean that the level of the first feature is higher than that of the second feature. The first feature "below" and "under" the second feature may mean that the first feature is directly below or obliquely below the second feature, or simply mean that the level of the first feature is smaller than that of the second feature.

Although the embodiments of the present disclosure have been shown and described above, it can be understood that the above-mentioned embodiments are exemplary and should not be construed as limiting the present disclosure. Those of ordinary skill in the art can make changes, modifications, replacements and variations to the above-mentioned embodiments within the scope of the present disclosure.

**Claims**

1. An air ionization display apparatus, comprising:

   a pulse laser source (11) configured to generate a pulse laser beam;
   a beam splitter (12) configured to split the pulse laser beam into a first sub-beam and a second sub-beam;
   a pulse laser regulation assembly (13) configured to regulate a wavelength of the second sub-beam to obtain a third sub-beam, and regulate a time difference between the third sub-beam and the first sub-beam to delay an emission of the third sub-beam;
   a beam combiner (14) configured to combine the first sub-beam and the third sub-beam that is subject to the delayed emission to obtain a combined beam; and
   a light field adjustment and control assembly (15) configured to adjust and converge the combined beam, and ionize air at a display region to form a holographic image,
   wherein the pulse laser regulation assembly comprises:

      a pulse laser regulator (131) configured to regulate the wavelength of the second sub-beam to obtain the third sub-beam; and
      an optical delay line (132) configured to regulate the time difference between the third sub-beam and the first sub-beam to delay the emission of the third sub-beam,

   wherein the light field adjustment and control assembly comprises:

      an adjustment unit (151) configured to perform a direction adjustment on the combined beam;
      a focusing unit (152) configured to focus the combined beam subject to the direction adjustment in the display region, and ionize the air at a position of a focal point to form an image; and
      a zoom unit (153) disposed between the adjustment unit and the focusing unit, and configured to adjust a divergence angle of a beam emitted by the adjustment unit and adjust a depth position of the focal point, to display the holographic image.

2. The air ionization display apparatus according to claim 1, further comprising:
   a controller connected to the pulse laser source, the pulse laser regulation assembly, and the light field adjustment and control assembly, and configured to control laser outputted by the pulse laser source, the pulse laser regulation assembly, and the light field adjustment and control assembly based on brightness information of the holographic image.

3. The air ionization display apparatus according to claim 1, wherein the optical delay line comprises:

a cube-corner prism comprising two total reflection mirrors perpendicular to each other, the cube-corner prism being configured to reflect the third sub-beam emitted by the pulse laser regulator to the beam combiner; and
a motorized translation stage configured to drive the cube-corner prism to move in an incident direction of the third sub-beam.

4. The air ionization display apparatus according to claim 1, wherein the optical delay line comprises:

a first cube-corner prism and a second cube-corner prism, each of the first cube-corner prism and the second cube-corner prism comprising two total reflection mirrors perpendicular to each other, and one of the two total reflection mirrors of the first cube-corner prism being disposed directly opposite to one of the two total reflection mirrors of the second cube-corner prism;
a motorized translation stage configured to drive at least one of the first cube-corner prism and the second cube-corner prism to move in an incident direction of the third sub-beam; and
a first reflective mirror and a second reflective mirror, the first reflective mirror being configured to reflect the third sub-beam emitted by the pulse laser regulator to the other one of the two total reflection mirrors of the first cube-corner prism, and the second reflective mirror being configured to reflect the third sub-beam emitted by the other one of the two total reflection mirrors of the second cube-corner prism to the beam combiner.

5. The air ionization display apparatus according to claim 1, wherein:

the adjustment unit comprises a galvanometer assembly, the galvanometer assembly comprises two groups of reflective mirrors that are perpendicular to each other, the focusing unit comprises an f-theta assembly, and the zoom unit comprises a zoom lens assembly; or
the adjustment unit comprises an ultrafast rotary polygonal mirror assembly, the ultrafast rotary polygonal mirror assembly comprises a polygonal reflecting body capable of quick rotation, the zoom unit comprises an ultrafast deformable mirror assembly, and the ultrafast deformable mirror assembly comprises a piezoelectric material driver and a reflective mirror surface; or
the adjustment unit comprises a Micro-Electro-Mechanical-System (MEMS) micro mirror, and the MEMS micro mirror comprises a reflective mirror, a fixed electrode, and a moving electrode; or
the adjustment unit comprises a liquid crystal optical phased array, and the liquid crystal optical phased array comprises a liquid crystal molecular layer 26; or
the adjustment unit comprises a digital micro galvanometer array, and the digital micro galvanometer array comprises a micro galvanometer array lens 30.

6. The air ionization display apparatus according to claim 1, further comprising:
a half-wave plate configured to regulate polarization of the pulse laser beam outputted by the pulse laser source.

7. A control method for an air ionization display apparatus, the method being applied in the air ionization display apparatus according to any one of claims 1 to 6 and comprising:

outputting (S121), by the pulse laser source, the pulse laser beam, and splitting, by the beam splitter, the pulse laser beam into the first sub-beam and the second sub-beam;
regulating (S122), by the pulse laser regulation assembly, the wavelength of the second sub-beam to obtain the third sub-beam, and regulating, by the pulse laser regulation assembly, the time difference between the third sub-beam and the first sub-beam, to delay the emission of the third sub-beam;
combining (S123), by the beam combiner, the first sub-beam and the third sub-beam that is subject to the delayed emission to obtain the combined beam;
adjusting and converging (S124), by the light field adjustment and control assembly, the combined beam, and ionizing, by the light field adjustment and control assembly, the air at the display region to form the holographic image; and
obtaining (S125) brightness information of the holographic image, and controlling the pulse laser regulation assembly and the light field adjustment and control assembly based on the brightness information of the holographic image to enable a brightness of the holographic image to meet a predetermined condition.

EP 4 318 083 B1

8. The control method for the air ionization display apparatus according to claim 7, further comprising, subsequent to said controlling the pulse laser regulation assembly and the light field adjustment and control assembly based on the brightness information of the holographic image:
controlling the pulse laser source to output a lowest-energy pulse laser beam having a highest allowable repetition frequency and meeting an air ionization threshold.

**Patentansprüche**

1. Luftionisierungsbildgebungsvorrichtung, umfassend:

   eine Pulslaserquelle (11), die dazu konfiguriert ist, einen Pulslaserstrahl zu erzeugen;
   einen Strahlteiler (12), der konfiguriert ist, den Pulslaserstrahl in einen ersten Teilstrahl und einen zweiten Teilstrahl zu teilen;
   eine Pulslaser-Regelbaugruppe (13), die dazu ausgebildet ist, eine Wellenlänge des zweiten Teilstrahls zu regulieren, um einen dritten Teilstrahl zu erhalten, und einen Zeitunterschied zwischen dem dritten Teilstrahl und dem ersten Teilstrahl zu regulieren, um eine Emission des dritten Teilstrahls zu verzögern;
   einen Strahlkombinierer (14), der dazu konfiguriert ist, den ersten Teilstrahl und den dritten Teilstrahl, der der verzögerten Emission unterzogen ist, zu kombinieren, um einen kombinierten Strahl zu erhalten; und
   eine Lichtfeld-Einstell- und Steuerbaugruppe (15), die dazu konfiguriert ist den kombinierten Strahl einzustellen und zu fokussieren und Luft in einem Anzeigebereich zu ionisieren, um ein holografisches Bild zu erzeugen, wobei die Pulslaser-Regelbaugruppe umfasst:

      einen Impulslaserregler (131), der dazu konfiguriert ist, die Wellenlänge des zweiten Teilstrahls zu regulieren, um den dritten Teilstrahl zu erhalten; und
      eine optische Verzögerungsstrecke (132), die dazu konfiguriert ist, den Zeitunterschied zwischen dem dritten Teilstrahl und dem ersten Teilstrahl zu regulieren, um die Emission des dritten Teilstrahls zu verzögern,

   wobei die Lichtfeld-Einstell- und Steuerbaugruppe umfasst:

      eine Einstelleinheit (151), die dazu konfiguriert ist, eine Richtungseinstellung an dem kombinierten Strahl durchzuführen;
      eine Fokussiereinheit (152), die dazu konfiguriert ist, den kombinierten Strahl, der einer Richtungseinstellung unterzogen ist, im Anzeigebereich zu fokussieren und die Luft an einer Position eines Fokuspunktes zu ionisieren, um ein Bild zu erzeugen; und
      eine Zoomeinheit (153), die zwischen der Einstelleinheit und der Fokussiereinheit angeordnet ist und dazu konfiguriert ist, einen Divergenzwinkel eines von der Einstelleinheit emittierten Strahls einzustellen und eine Tiefenposition des Brennpunkts einzustellen, um das holografische Bild anzuzeigen.

2. Luftionisierungsbildgebungsvorrichtung nach Anspruch 1, ferner umfassend:
   einen Controller, der mit der Pulslaserquelle, der Pulslaser-Regelbaugruppe und der Lichtfeld-Einstell- und Steuerbaugruppe verbunden ist und dazu konfiguriert ist, den von der Pulslaserquelle ausgegebenen Laser, die Pulslaser-Regelbaugruppe und die Lichtfeld-Einstell- und Steuerbaugruppe basierend auf Helligkeitsinformationen des holografischen Bildes zu steuern.

3. Luftionisierungsbildgebungsvorrichtung nach Anspruch 1, wobei die optische Verzögerungsstrecke umfasst:

   ein Würfeleckenprisma, das zwei senkrecht zueinander angeordnete Totalreflektionsspiegel umfasst, wobei das Würfeleckenprisma dazu konfiguriert ist, den vom Impulslaserregler emittierten dritten Teilstrahl zum Strahlkombinierer zu reflektieren; und
   ein motorisierter Verschiebetisch, der dazu konfiguriert ist, das Würfeleckenprisma in einer Einfallsrichtung des dritten Teilstrahls zu bewegen.

4. Luftionisierungsbildgebungsvorrichtung nach Anspruch 1, wobei die optische Verzögerungsstrecke umfasst:

   ein erstes Würfeleckenprisma und ein zweites Würfeleckenprisma, wobei sowohl das erste Würfeleckenprisma als auch das zweite Würfeleckenprisma zwei zueinander senkrechte Totalreflektionsspiegel umfassen und

11

wobei einer der beiden Totalreflektionsspiegel des ersten Würfeleckenprismas direkt einem der beiden Totalreflektionsspiegel des zweiten Würfeleckenprismas entgegengesetzt angeordnet ist;

einen motorisierten Verschiebetisch, der dazu konfiguriert ist, mindestens eines der ersten Würfeleckenprismas und des zweiten Würfeleckenprismas in einer Einfallsrichtung des dritten Teilstrahls zu bewegen; und

einen ersten Reflektionsspiegel und einen zweiten Reflektionsspiegel, wobei der erste Reflektionsspiegel dazu konfiguriert ist, den dritten Teilstrahl, der vom Impulslaserregler emittiert wurde, zu dem anderen der beiden Totalreflektionsspiegel des ersten Würfeleckenprismas zu reflektieren, und wobei der zweite Reflektionsspiegel dazu konfiguriert ist, den dritten Teilstrahl, der vom anderen der beiden Totalreflektionsspiegel des zweiten Würfeleckenprismas emittiert wurde, zum Strahlkombinierer zu reflektieren.

5. Luftionisierungsbildgebungsvorrichtung nach Anspruch 1, wobei:

die Einstelleinheit eine Galvanometerbaugruppe umfasst, die zwei Gruppen von zueinander senkrecht angeordneten Reflektionsspiegeln, wobei die Fokussiereinheit eine F-Theta-Baugruppe umfasst, und wobei die Zoomeinheit eine Zoomlinsenbaugruppe umfasst; oder
die Einstelleinheit eine ultraschnelle rotierende Polygonspiegelbaugruppe umfasst, die einen polygonalen Reflektionskörper umfasst, der sich schnell drehen kann, wobei die Zoomeinheit eine ultraschnelle deformierbare Spiegelbaugruppe umfasst, die einen piezoelektrischen Materialantrieb und eine Reflektionsspiegeloberfläche aufweist; oder
die Einstelleinheit einen Mikrospiegel eines mikroelektromechanischen Systems (MEMS) umfasst, und der MEMS-Mikrospiegel einen Reflektionsspiegel, eine feste Elektrode und eine bewegliche Elektrode umfasst; oder
die Einstelleinheit ein Flüssigkristall-optisches Phasenarray umfasst, das eine Flüssigkristallmolekularschicht 26 umfasst; oder
die Einstelleinheit ein digitales Mikrogalvanometer-Array umfasst, das eine Mikrogalvanometer-Array-Linse 30 umfasst.

6. Luftionisierungsbildgebungsvorrichtung nach Anspruch 1, ferner umfassend:
eine Halbwellenplatte, die dazu konfiguriert ist, die Polarisation des von der Pulslaserquelle ausgegebenen Pulslaserstrahls zu regulieren.

7. Steuerungsverfahren für eine Luftionisierungsbildgebungsvorrichtung, wobei das Verfahren in der Luftionisierungsbildgebungsvorrichtung nach einem der Ansprüche 1 bis 6 angewendet wird und umfasst:

Ausgeben (S121) des Pulslaserstrahls durch die Pulslaserquelle und Aufteilen des Pulslaserstrahls durch den Strahlteiler in den ersten Teilstrahl und den zweiten Teilstrahl;
Regulieren (S122) der Wellenlänge des zweiten Teilstrahls durch die Pulslaser-Regelbaugruppe, um den dritten Teilstrahl zu erhalten, und Regulieren, durch die Pulslaser-Regelbaugruppe, des Zeitunterschieds zwischen dem dritten Teilstrahl und dem ersten Teilstrahl, um die Emission des dritten Teilstrahls zu verzögern;
Kombinieren (S123), durch den Strahlkombinierer, des ersten Teilstrahls und des dritten Teilstrahls, der der verzögerten Emission unterzogen ist, um den kombinierten Strahl zu erhalten;
Einstellen und Fokussieren (S124) des kombinierten Strahls durch die Lichtfeld-Einstell- und Steuerbaugruppe, sowie Ionisieren der Luft im Anzeigebereich durch die Lichtfeld-Einstell- und Steuerbaugruppe, um das holografische Bild zu erzeugen; und
Erfassen (S125) von Helligkeitsinformationen des holografischen Bildes, und Steuern der Pulslaser-Regelbaugruppe sowie der Lichtfeld-Einstell- und Steuerbaugruppe basierend auf der Helligkeitsinformationen, sodass die Helligkeit des holografischen Bildes eine vorgegebene Bedingung erfüllt.

8. Steuerungsverfahren für die Luftionisierungsbildgebungsvorrichtung nach Anspruch 7, weiterhin umfassend, nach dem Steuern der Pulslaser-Regelbaugruppe und der Lichtfeld-Einstell- und Steuerbaugruppe basierend auf der Helligkeitsinformation des holografischen Bildes:
Steuern der Pulslaserquelle, um einen Niedrigstenergie-Pulslaserstrahl mit der höchstzulässigen Wiederholfrequenz auszugeben, der eine Luftionisationsschwelle erreicht.

**Revendications**

1. Un appareil d'affichage à ionisation d'air, comprenant :
une source de laser pulsée (11) configurée pour générer un faisceau laser pulsé :

un séparateur de faisceau (12)

configuré pour diviser le faisceau laser pulsé en un premier sous-faisceau et un second sous-faisceau ;

un ensemble de régulation du laser pulsée (13)

configuré pour réguler une longueur d'onde du second sous-faisceau afin d'obtenir un troisième sous-faisceau, et réguler une différence de temps entre le troisième sous-faisceau et le premier sous-faisceau pour retarder une émission du troisième sous-faisceau ;

un combineur de faisceaux (14)

configuré pour combiner le premier sous-faisceau et le troisième sous-faisceau soumis à l'émission retardée afin d'obtenir un faisceau combiné ; et

un ensemble de réglage et de contrôle du champ lumineux (15)

configuré pour ajuster et converger le faisceau combiné, et ioniser l'air dans une zone d'affichage pour former une image holographique,

où l'ensemble de régulation du laser pulsée comprend :

un régulateur de laser pulsée (131)

configuré pour réguler la longueur d'onde du second sous-faisceau afin d'obtenir le troisième sous-faisceau ; et

une ligne à retard optique (132)

configurée pour réguler la différence de temps entre le troisième sous-faisceau et le premier sous-faisceau pour retarder l'émission du troisième sous-faisceau,

où l'ensemble de réglage et de contrôle du champ lumineux comprend :

une unité de réglage (151)

configurée pour effectuer un réglage de direction sur le faisceau combiné ;

une unité de focalisation (152)

configurée pour focaliser le faisceau combiné soumis au réglage de direction dans la zone d'affichage, et ioniser l'air à la position d'un point focal pour former une image ; et

une unité de zoom (153) disposée entre l'unité de réglage et l'unité de focalisation, et configurée pour ajuster un angle de divergence d'un faisceau émis par l'unité de réglage et ajuster une position en profondeur du point focal, pour afficher l'image holographique.

2. L'appareil d'affichage à ionisation d'air selon la revendication 1, comprenant en outre :

un contrôleur connecté à la source de laser pulsée, à l'ensemble de régulation du laser pulsée et à l'ensemble de réglage et de contrôle du champ lumineux, et configuré pour contrôler le laser émis par la source de laser pulsée, l'ensemble de régulation du laser pulsée et l'ensemble de réglage et de contrôle du champ lumineux sur la base des informations de luminosité de l'image holographique.

3. L'appareil d'affichage à ionisation d'air selon la revendication 1, dans lequel la ligne à retard optique comprend :

un prisme en coin de cube comprenant deux miroirs à réflexion totale perpendiculaires l'un à l'autre, le prisme en coin de cube étant configuré pour réfléchir le troisième sous-faisceau émis par le régulateur de laser pulsée vers le combineur de faisceaux ; et

une platine de translation motorisée configurée pour entraîner le prisme en coin de cube à se déplacer dans une direction incidente du troisième sous-faisceau.

4. L'appareil d'affichage à ionisation d'air selon la revendication 1, dans lequel la ligne à retard optique comprend :

un premier prisme en coin de cube et un second prisme en coin de cube, chacun du premier prisme en coin de cube et du second prisme en coin de cube comprenant deux miroirs à réflexion totale perpendiculaires l'un à l'autre, et l'un des deux miroirs à réflexion totale du premier prisme en coin de cube étant disposé directement opposé à l'un des deux miroirs à réflexion totale du second prisme en coin de cube ;

une platine de translation motorisée configurée pour entraîner au moins l'un du premier prisme en coin de cube et du second prisme en coin de cube à se déplacer dans une direction incidente du troisième sous-faisceau ; et

un premier miroir réfléchissant et un second miroir réfléchissant, le premier miroir réfléchissant étant configuré pour réfléchir le troisième sous-faisceau émis par le régulateur de laser pulsée vers l'autre des deux miroirs à réflexion totale du premier prisme en coin de cube, et le second miroir réfléchissant étant configuré pour réfléchir le troisième sous-faisceau émis par l'autre des deux miroirs à réflexion totale du second prisme en coin de cube vers le combineur de faisceaux.

5. L'appareil d'affichage à ionisation d'air selon la revendication 1, dans lequel :

l'unité de réglage comprend un ensemble galvanomètre, l'ensemble galvanomètre comprend deux groupes de miroirs réfléchissants qui sont perpendiculaires l'un à l'autre, l'unité de focalisation comprend un ensemble f-thêta, et l'unité de zoom comprend un ensemble de lentilles de zoom ; ou

l'unité de réglage comprend un ensemble de miroir polygonal rotatif ultrarapide, l'ensemble de miroir polygonal rotatif ultrarapide comprend un corps réfléchissant polygonal capable d'une rotation rapide, l'unité de zoom comprend un ensemble de miroir déformable ultrarapide, et l'ensemble de miroir déformable ultrarapide comprend un actionneur en matériau piézoélectrique et une surface de miroir réfléchissante ; ou

l'unité de réglage comprend un micromiroir de système microélectromécanique (MEMS), et le micromiroir MEMS comprend un miroir réfléchissant, une électrode fixe et une électrode mobile ; ou

l'unité de réglage comprend un réseau phasé optique à cristaux liquides, et le réseau phasé optique à cristaux liquides comprend une couche moléculaire de cristaux liquides 26 ; ou

l'unité de réglage comprend un réseau de micro-galvanomètres numériques, et le réseau de micro-galvanomètres numériques comprend une lentille de réseau de micro-galvanomètres 30.

6. L'appareil d'affichage à ionisation d'air selon la revendication 1, comprenant en outre :
une lame demi-onde configurée pour réguler la polarisation du faisceau laser pulsé émis par la source de laser pulsée.

7. Un procédé de commande pour un appareil d'affichage à ionisation d'air, le procédé étant appliqué dans l'appareil d'affichage à ionisation d'air selon l'une quelconque des revendications 1 à 6 et comprenant :

délivrance (S121),
par la source de laser pulsée, du faisceau laser pulsé, et division, par le séparateur de faisceau, du faisceau laser pulsé en le premier sous-faisceau et le second sous-faisceau ;
régulation (S122),
par l'ensemble de régulation du laser pulsée, de la longueur d'onde du second sous-faisceau afin d'obtenir le troisième sous-faisceau, et régulation, par l'ensemble de régulation du laser pulsée, de la différence de temps entre le troisième sous-faisceau et le premier sous-faisceau, pour retarder l'émission du troisième sous-faisceau ;
combiner (S123),
par le combineur de faisceaux, le premier sous-faisceau et le troisième sous-faisceau qui est soumis à l'émission retardée pour obtenir le faisceau combiné ;
ajuster et faire converger (S124),
par l'ensemble d'ajustement et de contrôle du champ lumineux, le faisceau combiné, et ioniser, par l'ensemble d'ajustement et de contrôle du champ lumineux, l'air au niveau de la zone d'affichage pour former l'image holographique ; et
obtention (S125)
des informations de luminosité de l'image holographique, et commander l'ensemble de régulation du laser pulsé et l'ensemble d'ajustement et de contrôle du champ lumineux sur la base des informations de luminosité de l'image holographique, afin de permettre à la luminosité de l'image holographique de satisfaire une condition prédéterminée.

8. Le procédé de commande pour l'appareil d'affichage à ionisation d'air selon la revendication 7, comprenant en outre, suite à ladite commande de l'ensemble de régulation du laser pulsé et de l'ensemble d'ajustement et de contrôle du champ lumineux sur la base des informations de luminosité de l'image holographique :
commander la source de laser pulsé pour émettre un faisceau laser pulsé de plus faible énergie, ayant une fréquence de répétition admissible la plus élevée et satisfaisant un seuil d'ionisation d'air.

Air ionization display apparatus 10

| Pulse laser source 11 | Beam splitter 12 | Pulse laser regulation assembly 13 |

Beam combiner 14

Light field adjustment and control assembly 15

FIG. 1

Controller 16

Air ionization display apparatus 10

| Pulse laser source 11 | Half-wave plate 17 | Beam splitter 12 | Pulse laser regulation assembly 13 |

Beam combiner 14

Light field adjustment and control assembly 15

FIG. 2

Controller 16

Pulse laser
source 11

Half-wave plate
17

Beam splitter
12

Pulse laser regulation
assembly 13

Pulse laser regulator
131

Air ionization display apparatus 10

Beam
combiner 14

Optical delay line 132

Light field
adjustment and
control
assembly 15

FIG. 3

1322

132

1321

FIG. 4

16

1325

132

1324

1322

1323

1326

FIG. 5

152    153    151    15

FIG. 6

FIG. 7

FIG. 8

FIG. 9

FIG. 10

| | |
|---|---|
| Outputting, by a master computer, a pulse laser beam having a specific repetition frequency and energy as a test pulse based on an optical feature of a pulse laser source | S111 |
| Displaying, by the pulse laser beam, a preliminary test pattern via a light field adjustment and control assembly | S112 |
| Controlling, by a slave computer, a motorized translation stage to perform time delay tuning, and controlling, by the slave computer, a pulse laser regulator to perform a wavelength scanning | S113 |
| Collecting, by the light field adjustment and control assembly, a brightness of the test pattern, converting the brightness of the test pattern into an electrical signal, and transmitting the electrical signal to the slave computer | S114 |
| Controlling, by the slave computer based on the brightness of the test pattern, each of the motorized translation stage and the pulse laser regulator to be regulated to an optimal position, the test pattern having a maximum brightness at the optimal position | S115 |
| Controlling, by the master computer, the pulse laser source to output a lowest-energy pulse laser beam having a highest repetition frequency and meeting an ionization threshold | S116 |
| Controlling, by the slave computer, the light field adjustment and control assembly to scan out a three-dimensional display pattern | S117 |

FIG. 11

| |
|---|
| Outputting, by the pulse laser source, the pulse laser beam, and splitting, by the beam splitter, the pulse laser beam into the first sub-beam and the second sub-beam |

S121

| |
|---|
| Regulating, by the pulse laser regulation assembly, the wavelength of the second sub-beam to obtain the third sub-beam, and regulating, by the pulse laser regulation assembly, the time difference between the third sub-beam and the first sub-beam, to delay the emission of the third sub-beam |

S122

| |
|---|
| Combining, by the beam combiner, the first sub-beam and the third sub-beam that is subject to the delayed emission to obtain the combined beam |

S123

| |
|---|
| Adjusting and converging, by the light field adjustment and control assembly, the combined beam, and ionizing, by the light field adjustment and control assembly, the air at the display region to form the holographic image |

S124

| |
|---|
| Obtaining brightness information of the holographic image, and controlling the pulse laser regulation assembly and the light field adjustment and control assembly based on the brightness information of the holographic image to enable a brightness of the holographic image to meet a predetermined condition |

S125

FIG. 12

**EP 4 318 083 B1**

**Patent documents cited in the description**

- CN 111239236 A
- WO 2013039465 A1
- WO 2017053336 A1